# EUROPEAN PATENT APPLICATION

(11) **EP 1 568 413 A1**
(43) Date of publication of application: **31.08.2005**
(21) Application number: 04255021.0
(22) Date of filing: 20.08.2004
(51) Int. Cl.: B01J 19/12

(54) **Gas processing device and combustion efficiency improving device for engines**

(30) Priority: 27.02.2004 JP 2004053934
(71) Applicant: Hasegawa, Keiichi, Gifu-ken 503-0102 (JP)
(72) Inventor: Hasegawa, Keiichi, Gifu-ken 503-0102 (JP)
(74) Representative: Browne, Robin Forsythe

(57) **Abstract**

A gas processing device that improves the properties of gas passing through a gas passage of an apparatus and is easily installed on the gas passage of the apparatus. The gas processing device is provided with an electron vibration generating body including a main body having a large electric conductivity. The electron vibration generating body is vibrated when irradiated with light. An electric conductor is arranged between the electron vibration generating body and the gas passage for transmitting vibration of the electron vibration generating body to the gas passage.

## Description

### BACKGROUND OF THE INVENTION

The present invention relates to a gas processing device for improving properties of the gas passing through a gas passage of an apparatus. The present invention also relates to a device for improving combustion efficiency for an engine of a vehicle and the like.

The properties of water changes depending on the type and concentration of the salt dissolved in the water. However, the shape of electron clouds, or the state of water molecule electrons, has a larger influence on the properties of water. Generally, in a state in which electrons have a high energy level, which involves loss of potential energy and decrease in entropy, electrostatic attraction of ions and charged particles dissolved in water becomes small. As a result, a neutralizing dispersion effect of potential differences occurs at the interface between, for example, water and metal. This causes ions and suspended substances in the water to be dispersed from the interface and prevents scales from being produced.

A hydrotreater using this scale prevention principle is known in the art. The hydrotreater includes an electrode structure and an electron field generator. The electrode structure has a titanium anode rod arranged in the center of an external cylinder, which functions as a cathode. The electron field generator is positioned on the external cylinder. The properties of water are changed by a weak current that is applied to the water when passing between the two electrodes. This water processing technique is generally referred to as electron field processing and is applied in various fields.

In addition to the hydrotreater, a water processing technique using a so-called magnet mixer has also been developed in the prior art. In the magnet mixer, water passes through a magnetic field while being rotated by the mixer. When passing through the magnetic field, scale products contained in the water are electrochemically changed by an electric field generated based on Faraday's law. This weakens the electron bonding energy between a positive ion and a negative ion, which is the main cause of scale production. Further, scales that have already been produced are gradually pulverized and eliminated.

In the aforementioned hydrotreater and magnet mixer, water must either pass through two electrodes or through a magnetic field. Thus, the hydrotreater and magnet mixer must be arranged in a pipe. However, the attachment and removal of the hydrotreater or magnet mixer is burdensome. When using the hydrotreater or the magnet mixer in an existing water processing facility, for example, the hydrotreater or magnet mixer must be installed in accordance with the facility.

The above mentioned hydrotreater works under the following principles. When wave motion is externally applied to an electron having a wave motion corresponding to its position in the molecule, the wave motion of the electron is changed. This changes the position of the electron. That is, the change of wave motion of the electron in the water can be considered as an amplification of the wave motion, causing the electron to move outwards so that the electron of the water shifts to a higher energy level. This prevents scales from being produced, as mentioned above.

Accordingly, the applicant of the present invention has proposed a water processing device disclosed in Japanese Patent No. 2882897.

Each of the above mentioned water processing devices including that described in Japanese Patent No. 2882897 improves the properties of water passing through a water passage in an apparatus. However, these devices do not improve the properties of gas (e.g., oxygen or air) passing through the gas passage of the apparatus. Furthermore, these devices do not improve the fuel efficiency of an engine.

### SUMMARY OF THE INVENTION

It is an object of the present invention to provide an effective gas processing device that improves the properties of gas passing through a gas passage of an apparatus and is easily installed on the gas passage of the apparatus. A further object of the present invention is to improve the fuel efficiency of an engine.

To achieve the above objects, the present invention provides a gas processing device for processing gas passing through a gas passage of an apparatus. The gas processing device is provided with an electron vibration generating body including a main body having a large electric conductivity. The electron vibration generating body is vibrated when irradiated with light. The vibration of the electron vibration generating body is transmitted to the gas passage.

Another aspect of the present invention is a combustion efficiency improving device for an engine. The device includes an electron vibration generating main body having a resistivity being 0 to 200×10⁻⁶Ω·cm at 20°C. The main body is vibrated when irradiated with light. A surface body is adhered to the main body. The surface body includes an infrared ray radiating substance for generating light in an infrared wavelength range of 10⁻⁶ to 10⁻⁴ m when the surface body is irradiated with light. An electric conductor is arranged between the main body and at least one of a fuel supply passage for supplying the engine with fuel and an air supply passage for supplying the engine with air.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1(a) is a diagram showing the principles of an air processing device according to a first embodiment of the present invention;
Fig. 1(b) is a perspective view showing an air processing device according to a second embodiment of the present invention;
Fig. 1(c) is a cross sectional view of the device shown in Fig. 1(b);
Fig. 1(d) is a cross sectional view showing a modification of the device shown in Fig. 1(b);
Fig. 2(a) is a diagram showing the principles of a sewage processing apparatus to which the device shown in Fig. 1(a) is applied;
Fig. 2(b) is a diagram showing part of another sewage processing apparatus to which the device shown in Fig. 1(a) is applied;
Fig. 2(c) is a diagram showing part of a sewage processing apparatus to which the device shown in Fig. 1(b) is applied;
Fig. 2(d) is a table showing the data for an experiment conducted to confirm the effects of the device shown in Fig. 2 (a) ;
Fig. 3(a) is a diagram showing the principles of a steam boiler and a gas burner to which the device shown in Fig. 1(a) is applied;
Fig. 3(b) is a diagram showing the principles of an oil burner to which the device shown in Fig. 1(a) is applied;
Fig. 3(c) is a diagram showing part of the gas burner and oil burner of a steam boiler to which the device shown in Fig. 1(a) is applied;
Fig. 3(d) is a diagram showing part of the gas burner and oil burner of a steam boiler to which the device shown in Fig. 1(b) is applied;
Fig. 3(e) is a table showing the data for an experiment conducted to confirm the effects of the device shown in Fig. 3 (a) ;
Fig. 4 is a schematic system diagram showing a combustion efficiency improving device for a vehicle engine according to a third embodiment of the present invention;
Fig. 5(a) is an enlarged view showing a flat electron vibration generating body of Fig. 4;
Figs. 5(b) and 5(c) are enlarged cross sectional views, each showing an annular electron vibration generating body; and
Fig. 6 is a table showing data related to a driving test conducted to confirm the effects of the device shown in Fig. 4.

### DETAILED DESCRIPTION OF THE PREFERRED EMBODIMENTS

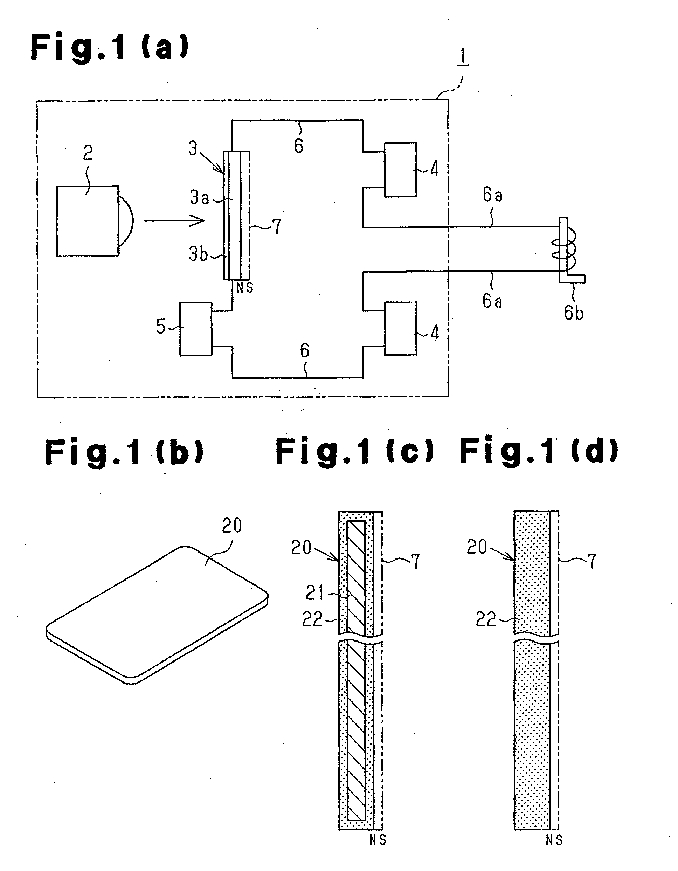

Fig. 1(a), Fig. 2(a), Fig. 3(a) and Fig. 3(b) show an air processing device, which functions as a gas processing device, and applications thereof according to a first preferred embodiment of the present invention. As shown in Fig. 1(a), an electron vibration generator 1, which functions as the air processing device, includes a light source 2, an electron vibration generating body 3, current limiters 4, and a power supply 5. The electron vibration generating body 3 and the current limiters 4 are connected in series to the power supply 5 by electric wires 6. Insulated connecting wires 6a, which extend from the electric wires 6, are connected to a connector 6b. The electron vibration generator 1 functions as an air processing device in this embodiment.

The electron vibration generating body 3 includes a main body 3a, which is connected to the electric wire 6, and a surface body 3b, which is attached to the outer side of the main body 3a. The main body 3a is made of a substance having a large amount of free electrons and unpaired electrons. Further, the substance of the main body 3a has large electric conductivity. More specifically, the main body 3a is made of a metal, such as silver, copper, aluminum, gold, and steel, a compound of these metals, a metal alloy, or electric carbon. Further, the substance of the main body 3a preferably has a resistivity, which corresponds to the inverse of the electric conductivity, in a range of 0 to 200 x 10⁻⁶ Q.cm at 20°C. The surface body 3b is made of a compound having a small ionic crystal radius, for example, a fluoride obtained by treating a substance with fluorine. More specifically, the surface body 3b is preferably made of a compound including positive ions having an ionic crystal radius in a range of 0.07 to 1.30 x 10⁻¹⁰ m. The surface body 3b is actually made of a silver fluoride obtained by treating silver in fluorine gas or hydrogen fluoride and the like. The surface body 3b may be made of an iron oxide, a copper oxide, or a beryllium oxide.

A resistor, a capacitor, a coil, or the like may be used as the current limiters 4. The capacitor and the coil are actually used as the current limiters 4. The power supply 5 may be a DC or AC power supply that is not affected by voltage or AC frequency. The power supply 5 is actually an AC power supply with a voltage of 12V and 210V. The electric wires 6 and the connecting wires 6a are electrically conductive. Copper wires are actually used as the electric wires 6 and the connecting wires 6a.

It is preferred that the light source 2 efficiently radiates light with an infrared wavelength of 10⁻⁶ to 10⁻⁴ m. When an infrared heater is used for the light source 2, heat is easily generated and the life is short. Thus, it is preferred that an infrared light emitting diode, a semiconductor laser, and the like be used as the light source 2. This would reduce the size and power consumption and prolong the life of the light source 2. A white light emitting diode or a semiconductor laser emitting light in the wavelength of 300×10⁻⁹ to 10⁻⁶ m is actually used.

The surface body 3b may be formed by applying an infrared ray radiating body, which is made of an infrared ray radiating substance that generates light having an infrared wavelength of 10⁻⁶ to 10⁻⁴ m, to the surface of the surface body 3b. Alternatively, the surface body 3b may be made by adhering a mixture of a powdered infrared ray radiating substance and an adhesive (e.g., transparent adhesive) to the surface of the surface body 3b or by mixing a powdered infrared ray radiating substance in the surface body 3b. The infrared ray radiating substance includes, for example, carbon (graphite), charcoal made from bamboo, wood, or coconut shells, or infrared ray generating ceramics.

When light from the light source 2 is radiated to the surface of the surface body 3b in the electron vibration generating body 3, the crystal lattice of the main body 3a is vibrated. Specifically, when the light from the white light emitting diode or the semiconductor laser emitting light in the wavelength of 300×10⁻⁹ to 10⁻⁶ m is radiated to the surface of the surface body 3b, the infrared ray radiating substance in the surface body 3b radiates the light having the infrared wavelength of 10⁻⁶ to 10⁻⁴ m. Due to this light from the surface body 3b, the electron vibration generating body 3 vibrates efficiently. This vibrates the free electrons. The vibrations of the electron vibration generating body 3 becomes large when the light waveband is 10⁻⁶ to 10⁻⁴ m, increases when the light waveband is 1.5×10⁻⁶ to 50×10⁻⁶ m, and becomes significant when the light waveband is 3×10⁻⁶ to 30×10⁻⁶ m. In this case, the vibration of the electron vibration generating body 3 increases as the electric conductivity of the main body 3a in the electron vibration generating body 3 increases and the ionic crystal radius of the surface body 3b decreases. When the free electron enters the flow of current, the vibrations of the free electrons are easily transmitted through the electric wires 6 and the connecting wires 6a. In the electron vibration generating body 3, the surface body 3b is not necessarily required, and light may be radiated to the main body 3a.

In the electron vibration generating body 3, a magnet 7 (permanent magnet or electromagnet) may be attached or arranged close to the rear side of the main body 3a facing away from the outer side (surface body 3b) to which the light is radiated. In this case, the N-pole side of the magnet 7 is arranged facing towards the rear side of the main body 3a. The vibration generating efficiency in the electron vibration generating body 3 is increased by the magnet 7.

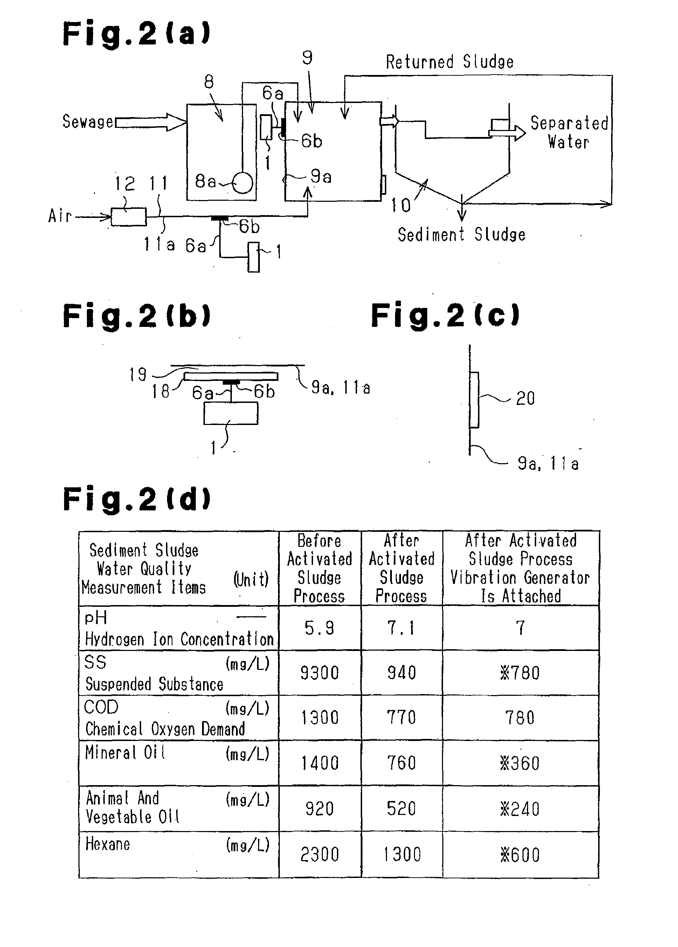

In a sewage processing apparatus (apparatus) shown in Fig. 2(a), sewage flows into a regulating tank 8. The sewage is then sent from the regulating tank 8 to an aeration tank 9 at a constant rate by a pump 8a. Active sludge is then sent from the aeration tank 9 and supplied to a sedimentation tank 10 in which the sludge is separated into sediment sludge and water. The sediment sludge is collected in the sedimentation tank 10 and the water is released from the sedimentation tank 10. An air supply duct 11 (air supply passage or gas supply passage) is connected to the aeration tank 9 (processing tank). An air supply blower 12 blows gas, or air (oxygen), into the aeration tank 9 through the air supply duct 11.

The electron vibration generator 1 is attached to the aeration tank 9 and the air supply duct 11. The connector 6b of the electron vibration generator 1 is connected to an outer wall 9a (electric conductor) of the aeration tank 9 and an outer wall 11a (electric conductor) of the air supply duct 11. As mentioned above, when light is radiated on the surface body 3b of the electron vibration generating body 3, the free electrons vibrate the crystal lattice in the electron vibration generating body 3. The vibration is transmitted from the connector 6b of the electron vibration generator 1 through the outer wall 9a of the aeration tank 9 and the outer wall 11a of the air supply duct 11. This vibrates the oxygen atoms of the air in an air chamber (air passage, gas passage) defined in the aeration tank 9 or in an air passage (gas passage) extending through the air supply duct 11.

In this case, the vibrations of the free electrons match the resonance frequency of the oxygen atoms. This vibrates the oxygen atoms. As a result, the orbits of the oxygen atom electrons change. This changes the wave motions of the electrons and shifts the oxygen atom electrons to orbits of a higher energy level. Accordingly, the oxygen is activated, the properties of the oxygen are changed, and aerobic microbes become active. This enhances sewage purification capability and improves the water quality of the sludge.

The table shown in Fig. 2(d) shows the measurement results of the sediment sludge water quality before and after the active sludge processing in a state in which the electron vibration generator 1 is not used and in a state in which the electron vibration generator 1 is used. The results show that the purification capability of the sewage is enhanced and that the water quality of the sludge is improved in a preferable manner after the active sludge processing in a state in which the electron vibration generator 1 is attached to the aeration tank 9 and the air supply duct 11.

The attachment of the electron vibration generator 1 is not limited to the outer wall 9a of the aeration tank 9 and the outer wall 11a of the air supply duct 11. The electron vibration generator 1 may be attached to another air passage portion in the aeration tank 9 and the air supply duct 11, as well as to aerobic processing tanks and air supply passages other than the aeration tank 9 and the air supply duct 11.

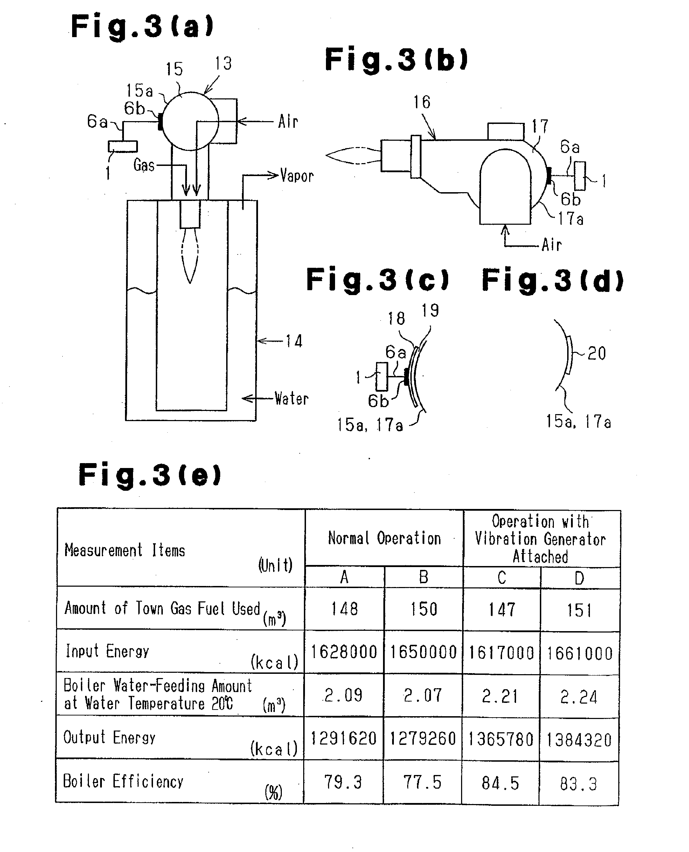

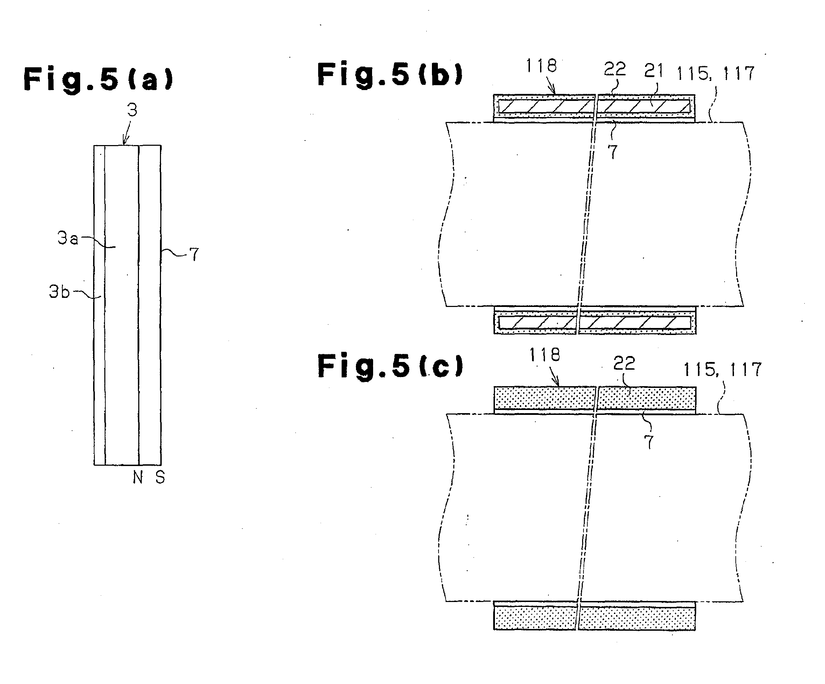

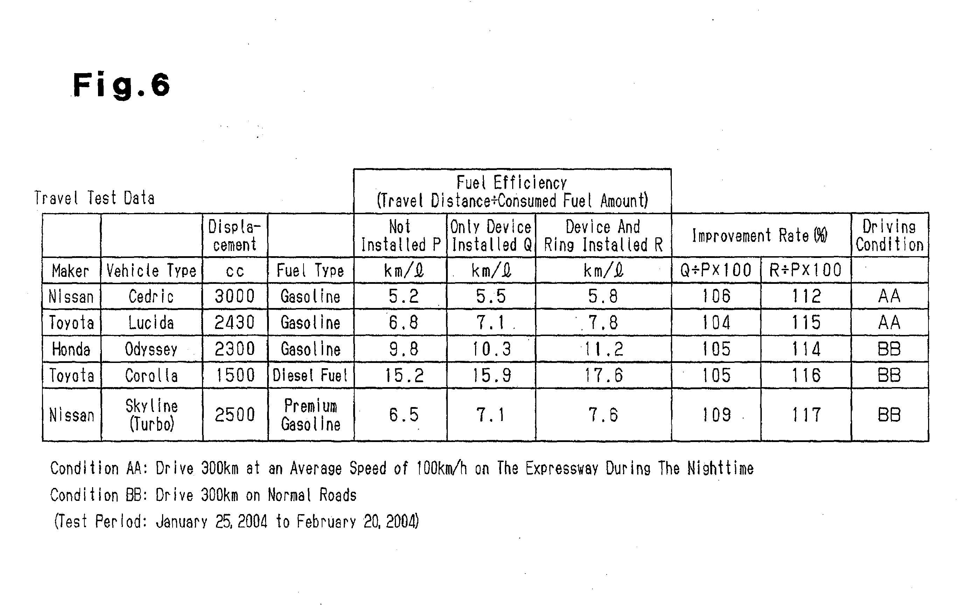

The above embodiment has the following advantages.
(1) The electron vibration generator 1, which functions as an air processing device, includes the electron vibration generating body 3 including the main body 3a having large electric conductivity. When light from the light source 2 radiates the electron vibration generating body 3, the vibration of the electron vibration generating body 3 is transmitted through the electric wires 6 and outer walls 9a and 11a to the gas passage of the apparatus. The electric wires 6 and outer walls 9a and 11a serve as electric conductors arranged between a gas passage of the apparatus to which the gas (e.g., oxygen, air and the like) is supplied and the electron vibration generating body 3. Only the vibration of the electron vibration generating body 3 needs to be transmitted to the gas passage of the apparatus. Thus, the electron vibration generator 1 is easily installed on the gas passage. Furthermore, gas such as oxygen and air is easily activated.
(2) The electron vibration generator 1 has the electron vibration generating body 3 including the main body 3a, the light source 2, and the electric wire 6 serving as electric conductors. Therefore, gas is reliably activated with a single device.
(3) It is preferred that the light source 2 generates light in the infrared wavelength of 10⁻⁶ and 10⁻⁴ m. Since vibration of the electron vibration generating body 3 becomes large at a light waveband in a range of about 10⁻⁶ to 10⁻⁴ m, gas such as oxygen and air is more easily activated.
(4) In the embodiment shown in Fig. 1(b), the surface body 3b, which is made of a compound having a small ionic crystal radius, is attached to the main body 3a of the electron vibration generating body 3. The surface body 3b includes an infrared ray radiating substance for producing light having an infrared wavelength in a range of 10⁻⁶ to 10⁻⁴m. The light from the light source 2 is radiated onto the surface body 3b. Thus, although the white light emitting diode or the semiconductor laser emitting light in the wavelength of 300×10⁻⁹ to 10⁻⁶ m is used as the light source 2, the electron vibration generating body 3 vibrates efficiently. Hence, the infrared heater need not be used for the light source 2. Therefore, it is prevented that the life of the gas processing device becomes short by the heat. The size and power consumption of the gas processing device is reduced. The life of the gas processing device is prolong.
(5) The apparatus is a sewage processing apparatus for supplying sewage to a regulating tank 8, an aeration tank 9, and a sedimentation tank 10, which serve as processing tanks for processing sewage. The gas passage defined in the air supply duct 11 is connected to the aeration tank 9 of the sewage processing apparatus or is an air chamber produced in the aeration tank 9 of the sewage processing apparatus. Therefore, in the sewage processing apparatus, the oxygen in the air is activated. This activates the function of aerobic microbes, enhances the purification capability of the sewage, and improves the water quality of the sludge.
   In a steam boiler (combustion device serving as an apparatus) shown in Fig. 3(a), a gas burner 13 is attached to a main body 14. Gas, or air (oxygen), supplied from an air supply blower 15 is mixed with gas (fuel) in the gas burner 13 and burned in the main body 14.
   The electron vibration generator 1 is attached to the air supply blower 15 of the gas burner 13, and the connector 6b of the electron vibration generator 1 is connected to an outer wall 15a (electric conductor) of the air supply blower 15. As mentioned above, when light is radiated on the surface body 3b of the electron vibration generating body 3, the free electrons vibrate the crystal lattice in the electron vibration generating body 3. The vibrations are transmitted from the connector 6b through the outer wall 15a of the air supply blower 15. This vibrates the oxygen atoms of the air in the air passage (gas passage) of the air supply blower 15. The vibrations of the free electrons match the resonant frequency of the oxygen atoms. This vibrates the oxygen atoms and shifts the electrons of the oxygen atoms to an orbit of higher energy level. Therefore, the oxygen is activated, and the properties of the oxygen are changed. This improves the combustion reaction between the hydrocarbon of fuel and oxygen and enhances the boiler efficiency.
   As shown in the table of Fig. 3(e), the amount of fuel used and the amount of boiler water supplied were measured for a predetermined time during continuous operation when the amount of steam generated was stabilized in states A and B in which the electron vibration generator 1 was not attached to the air supply blower 15 and states C, D in which the electron vibration generator 1 was attached to the air supply blower 15. Input energy and output energy were calculated from a predetermined calculation formula based on the amount of fuel used. The amount of boiler water supplied and the boiler efficiency were calculated from a predetermined calculation formula based on the input energy and the output energy. As apparent from the table of Fig. 3(e), the boiler efficiency was improved in states C, D.
   In this case, the apparatus is the gas burner 13 serving as a combustion device for mixing fuel and air and burning the mixture. The gas passage is defined within the air supply blower 15 for supplying air to the gas burner 13. Therefore, in the gas burner 13, the oxygen in the air is activated. This improves the combustion reaction and enhances the combustion efficiency.
   The electron vibration generator 1 does not have to be attached to the outer wall 15a of the air supply blower 15, and may be attached to an air supply passage (gas supply passage) other than the air supply blower 15 in the gas burner 13 or to the outer wall of the air supply duct (gas supply duct) connected to the air supply blower 15. As shown in Fig. 3(b), in an oil burner 16 (combustion device serving as an apparatus) for mixing air (oxygen) supplied from the air supply blower 17 with oil (fuel) and burning the mixture, the connector 6b of the electron vibration generator 1 is connected to an outer wall 17a (electric conductor) of the air supply blower 17. Furthermore, the connector 6b of the electron vibration generator 1 may be connected to other combustion devices that use oxidation reactions.
   Fig. 2(b) and Fig. 3(c) show an air processing device and applications thereof according to a modification of the first embodiment of the present invention. The electric conductor 18 is arranged close to the outer wall 9a of the aeration tank 9 and the outer wall 11a (electric conductor) of the air supply duct 11, or to the outer walls 15a and 17a (electric conductor) of the air supply blowers 15 and 17 in the gas burner 13 and the oil burner 16. The connector 6b of the electron vibration generator 1 is connected to the electric conductor 18. In this case, a gap 19 having a dimension of, for example, 30 mm or less is formed between the electric conductor 18 and the outer walls 9a, 11a, 15a, and 17a. The vibration of the crystal lattice caused by the free electrons is transmitted to the air in the gas passage through the electric conductor 18, the gap 19, and the outer walls 9a, 11a, 15a, and 17a. This improves the air in the gas passage in the same manner as described above.
   Figs. 1(b), 1(c), 1(d), 2(c), and 3(d) show an air processing device and applications thereof according to a second embodiment of the present invention. Referring to Fig. 1(b), a card-shaped electron vibration generating body 20 functions in the same way as the electron vibration generating body 3 of the first embodiment. The electron vibration generating body 20 functions as the air processing device in this embodiment. The electron vibration generating body 20 includes a base 21 and a surface layer 22. Referring to Fig. 1(c), the surface layer 22 is applied to the entire outer surface of the base 21 made from paper. The surface layer 22 is made by adding and solidifying a pigment-containing ink to beryllium oxide functioning as an amorphous white power, and is pigmented, for example, as red or blue. Characters and pictures for advertisements (not shown) are drawn on the surface layer 22. The surface layer 22 is made of a substance having large electric conductivity. For details of the surface layer 22, refer to the description of the main body 3a in the first embodiment. The base 21 may be made of steel as long as the surface layer 22 may be applied thereto. Further, the material of the base 21 may be changed as required.
   A compound having small ionic crystal radius is included in the surface layer 22. The surface layer 22 may be formed by applying an infrared ray radiating body, which is made of an infrared ray radiating substance that generates light having an infrared wavelength in a range of 10⁻⁶ to 10⁻⁴ m, to the surface of the base 21. Alternatively, the surface layer 22 may be made by adhering a mixture of a powdered infrared ray radiating substance and an adhesive (e.g., transparent adhesive) to the surface of the base 21 or by mixing a powdered infrared ray radiating substance in the surface body 3b.
   The present embodiment has the following advantages.
(6) The electron vibration generating body 20 functioning as a gas processing device includes the surface layer 22 having a large electric conductivity. When light is radiated onto the electron vibration generating body 20, the vibration of the electron vibration generating body 20 is transmitted through the outer walls 9a and 11a, which serve as electric conductors arranged between a gas passage of the apparatus supplied with gas and the electron vibration generating body 20, to the gas passage. Therefore, the gas processing device is easily installed on the gas passage, and gas, such as oxygen and air, is easily activated.
(7) In the embodiment shown in Fig. 1(c), the electron vibration generating body 20 is mainly made of the surface layer 22 that includes a mixture of a substance having large electric conductivity and a compound having small ionic crystal radius. The surface layer 22 contains an infrared ray radiating substance for producing light having an infrared wavelength between 10⁻⁶ and 10⁻⁴ m, and the light from the light source 2 is radiated onto the surface layer 22. Therefore, when the sun light or the like is radiated to the surface of the surface layer 22, the infrared ray radiating substance in the surface layer 22 radiates the light having the infrared wavelength of 10⁻⁶ to 10⁻⁴ m. Due to this light from the surface layer 22, the electron vibration generating body 20 vibrates efficiently. Hence, the electron vibration generating body 20 vibrates sufficiently without including a light source specially, thereby activates gas, such as oxygen and air, easily. Therefore, by not preparing a light source using sunlight, gas processing device is easily installed on the gas passage, and the size of the gas processing device is reduced.
   Further, referring to Fig. 1(d), the card-shaped electron vibration generating body 20 does not necessarily have to include the base 21, and the entire card may be the surface layer 22. In addition to cards, such an electron vibration generating body 20 may also be widely applied to for example, a bag or a package sheet.
   As shown in Fig. 1(d), the magnet 7 (permanent magnet or electromagnet) may be attached to the surface layer 22 on a rear surface thereof facing away from the surface side to which the light is radiated. In this case, the N-pole side of the magnet 7 is arranged facing towards the rear surface. The vibration generating efficiency in the electron vibration generating body 20 is increased with the magnet 7.
   As shown in Fig. 2(c), the above mentioned card-shaped electron vibration generating body 20 may be attached to the outer wall 9a of the aeration tank 9 or the outer wall 11a (electric conductor) of the air supply duct 11, or as shown in Fig. 3(d), to the outer walls 15a and 17a (electric conductor) of the air supply blowers 15 and 17 in the gas burner 13 and the oil burner 16. When sunlight or the like is radiated onto the surface layer 22 of the attached electron vibration generating body 20, the infrared ray radiating substance in the surface layer 22 radiates the light having the infrared wavelength of 10⁻⁶ to 10⁻⁴ m. Therefore, the crystal lattice and free electrons of the electron vibration generating body 20 vibrate. The vibration of the crystal lattice caused by the free electrons is transmitted to the air in the gas passage through the outer walls 9a, 11a, 15a, and 17a. This improves the air in the same manner as described above. The basic principal is the same as that of the first embodiment. Thus, refer to the description of the first embodiment for further details.

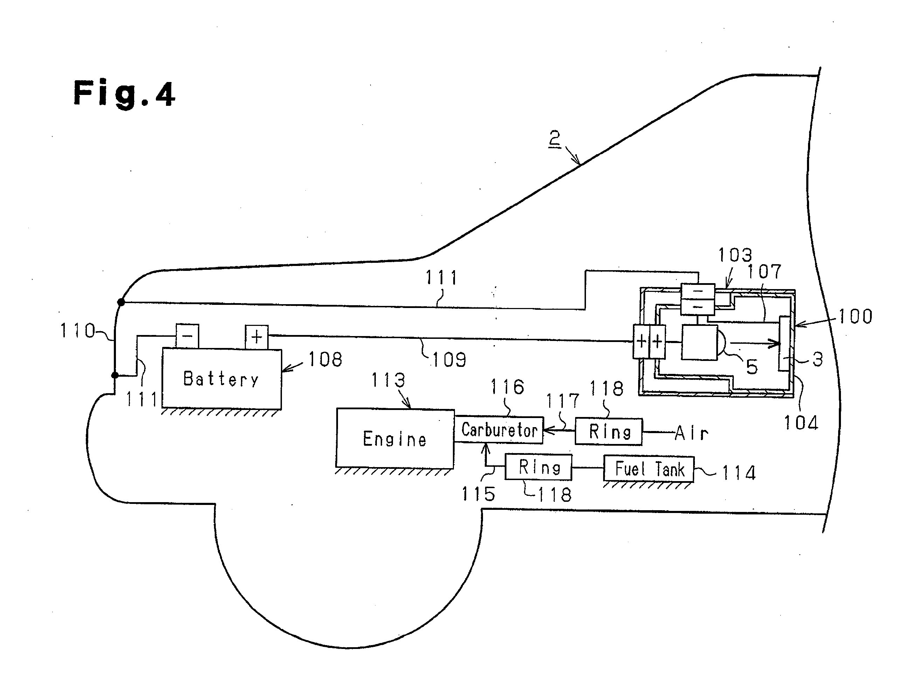

   Fig. 4 shows a combustion efficiency improving device for a vehicle engine according to a third embodiment of the present invention. The combustion efficiency improving device, which functions as a gas processing device in this embodiment, includes an electron vibration generator 100 and two rings 118. The electron vibration generator 100 is removably attached to a cigarette lighter socket 103 of a vehicle 102 (automobile). The electron vibration generator 100 includes a light source 2 and a plate-form electron vibration generating body 3, which are accommodated in an insulating case 104. The light source 2 is electrically connected to a positive pole and a negative pole of the cigarette lighter socket 103. The electron vibration generating body 3 is connected to the negative pole of the cigarette lighter socket 103 by an electric wire 107 (electric conductor). The positive pole of the cigarette lighter socket 103 is connected to the positive pole of a battery 108 (power supply, electric conductor) of the vehicle 102 by an electric wire 109 (electric conductor). The negative pole of the cigarette lighter socket 103 is connected to a negative pole of the battery 108 through a vehicle body 110 (electric conductor) with an electric wire 111 (electric conductor). The battery 108 is either DC 12V or DC 24V.
   As shown in Fig. 5(a), the electron vibration generating body 3 includes the main body 3a and a surface body 3b, which is attached to the outer side of the main body 3a. It is preferred that the light source 2 efficiently radiates light in an infrared wavelength of between 10⁻⁶ and 10⁻⁴ m. However, the light source 2 may also be sunlight. When the light from the light source 2 is radiated onto the surface of the surface body 3b, the crystal lattice of the surface body 3b is vibrated. This also vibrates the free electrons. When the free electrons enter the flow of the current, the vibration is more easily transmitted through the vehicle body 110.
   In the combustion engine 113 of the vehicle 102 shown in Fig. 4, the fuel from the fuel tank 114 is supplied through a fuel supply passage 115 (duct) to a carburetor 116, and air is supplied through an air supply passage 117 (duct) to the carburetor 116. A ring 118 (electron vibration generating body) is fitted onto the periphery of the fuel supply passage 115 and the air supply passage 117, as shown in Fig. 5(b) and Fig. 5(c).
   The rings 118 function in the same manner as the electron vibration generating body 3. As shown in Fig. 5(b), the surface layer 22 (body) is applied to the entire outer surface of the paper base 21. Further, in the ring 118 shown in Fig. 5(c), the base 21 is omitted and the entire ring 118 is the surface layer 22. For the ring 118, the magnet 7 may be attached to the rear surface of the surface layer 22 facing away from the outer side onto which the light is radiated. That is, the magnet 7 may be arranged between the ring 118 and the corresponding passage 115, 117. In this case, the N-pole side of the magnet 7 faces towards the rear surface.
   In the electron vibration generator 100 attached to the cigarette lighter socket 103, when the light from the light source 2 radiates the surface body 3b of the electron vibration generating body 3, the free electrons vibrate the crystal lattice in the electron vibration generating body 3. The vibrations are transmitted from each electric wire 107 and 111 through the vehicle body 110 to the fuel supply passage 115 and the air supply passage 117 of the engine 113. The vibrations resonate with the ring 118 (electron vibration generating body) fitted onto the fuel supply passage 115 and the air supply passage 117. This increases the vibrations.
   In the fuel supply passage 115, the vibrations of the free electrons coincide with the resonance frequency of the charged electrons of the fuel molecule and vibrate the charged electron. This changes the orbit of the charged electrons and the wave motion of the charged electron. As a result, the charged electrons shift to an orbit of higher energy level. Therefore, the fuel is activated and the properties of the fuel are changed. This improves the combustion reaction between the hydrocarbon of the fuel and the oxygen.
   In the air supply passage 117, the vibrations of the free electrons coincide with the resonance frequency of the oxygen atoms and vibrate the oxygen atoms. This changes the orbit and the wave motion of the oxygen atom electron. As a result, the oxygen atom electrons shift to an orbit of higher energy level. Therefore, the oxygen is activated and the properties of the oxygen are changed. This improves the combustion reaction between the hydrocarbon of the fuel and the oxygen.
   As shown in the table of Fig. 6, a drive test was carried out for specific types of vehicle under driving conditions AA and BB in a P state in which the electron vibration generator 100 and the ring 118 (electron vibration generating body) are not fixed to the vehicle 102, a Q state in which only the electron vibration generator 100 is fixed to the vehicle 102, and an R state in which both the electron vibration generator 100 and the ring 118 are fixed to the vehicle 102. As apparent from the results, regarding fuel consumption, the Q state improved more than the P state, and the R state improved more than the P state and the Q state.
   In addition to the above advantage (3), the present embodiment has the following advantages.
(8) The combustion efficiency improving device of the engine includes the electron vibration generating body 3 provided with the main body 3a having a large electric conductivity, the light source 2 for radiating light to the electron vibration generating body 3, and the electric wire 107 serving as an electric conductor arranged between the fuel supply passage 115 and the air supply passage 117 of the engine 113 and the electron vibration generating body 3. The vibrations of the electron vibration generating body 3 are transmitted to the fuel supply passage 115 and the air supply passage 117 through the electric wire 107. Therefore, fuel and air are activated by the vibrations.
(9) The electron vibration generator 100 is removably attached to the cigarette lighter socket 103. The vibration of the electron vibration generating body 3 is transmitted to the fuel supply passage 115 and the air supply passage 117 through the vehicle body 110 serving as an electric conductor connected to the cigarette lighter socket 103. Therefore, with a simple task of attaching the electron vibration generator 100 to the existing cigarette lighter socket 103, the vibration from the electron vibration generating body 3 is transmitted to the fuel supply passage 115 and the air supply passage 117 by effectively using the vehicle body 110 and the electric wires 109 and 111.
(10) The power supply of the light source 2 is the battery 108 of the vehicle 102. Therefore, the existing battery 108 is effectively used as a power supply. Other power supplies such as a dry cell may also be used in lieu of the battery 108.
(11) The ring 118 including a surface layer 22 serving as a body having large electric conductivity is attached to at least one of the fuel supply passage 115 or the air supply passage 117 of the engine 113. Therefore, vibrations are promoted by the ring 118 to further activate the fuel and oxygen.

The electron vibration generating body 3 of the electron vibration generator 100 may be connected to the fuel supply passage 115 and the air supply passage 117 of the engine 113 by the electric conductor without using the vehicle body 110.

Although not shown, the present invention may also be used, besides in the engine 113 of the vehicle 102, to improve the combustion efficiency of various types of engines arranged in, for example, a factory.

## Claims

1. A gas processing device for processing gas passing through a gas passage of an apparatus,
the gas processing device being **characterized by**:
an electron vibration generating body including a main body having a large electric conductivity, the electron vibration generating body being vibrated when irradiated with light, wherein the vibration of the electron vibration generating body is transmitted to the gas passage.

2. The gas processing device according to claim 1, **characterized in that** the main body has a resistivity inversely corresponding to the electric conductivity of the main body, said resistivity being 0 to 200×10⁻⁶Ω·cm at 20°C.

3. The gas processing device according to claim 1 or 2, **characterized in that** the electron vibration generating body generates the vibration to shift the oxygen atom electrons to orbits of a higher energy level.

4. The gas processing device according to any one of claims 1 to 3, **characterized by**:
a light source for radiating light onto the electron vibration generating body; and
an electric conductor arranged between the electron vibration generating body and the gas passage.

5. The gas processing device according to claim 4, **characterized in that** the light source generates light in an infrared wavelength range of 10⁻⁶ to 10⁻⁴ m.

6. The gas processing device according to any one of claims 1 to 5, **characterized in that** the electron vibration generating body includes a surface body adhered to the main body, the surface body including an infrared ray radiating substance for generating light in an infrared wavelength range of 10⁻⁶ to 10⁻⁴ m when the surface body is irradiated with light.

7. The gas processing device according to claim 6, wherein the surface body is made of a compound having a ionic crystal radius in a range of 0.07 to 1.30 × 10⁻¹⁰ m.

8. The gas processing device according to any one of claims 1 to 5, **characterized in that** the main body includes a surface layer having resistivity being 0 to 200×10⁻⁶Ω·cm at 20°C, the surface layer including an infrared ray radiating substance for generating light in an infrared wavelength range of 10⁻⁶ to 10⁻⁴ m when the surface layer is irradiated with light.

9. The gas processing device according to claim 8, wherein the surface layer is made of a compound having a ionic crystal radius in a range of 0.07 to 1.30 × 10⁻¹⁰ m.

10. The gas processing device according to any one of claims 5 to 9, **characterized in that** the apparatus is a sewage processing apparatus for supplying sewage to a processing tank and processing the sewage, the gas passage receiving the vibration of the electron vibration generating body is an air supply passage connected to the processing tank or an air chamber defined in the processing tank.

11. The gas processing device according to any one of claims 5 to 9, **characterized in that** the apparatus is a combustion apparatus for mixing fuel and air for combustion, the gas passage receiving the vibration of the electron vibration generating body is at least one of an air supply passage for supplying the combustion apparatus with air and a fuel supply passage for supplying the combustion apparatus with fuel.

12. The gas processing device according to any one of claims 1 to 11, **characterized in that** the apparatus is a combustion engine, the gas passage being at least one of an air supply passage for supplying the combustion apparatus with air and a fuel supply passage for supplying the combustion apparatus with fuel.

13. The gas processing device according to claim 12, **characterized by**:
an electron vibration generator including the electron vibration generating body and a light source for radiating light onto the electron vibration generating body; and
an electric conductor arranged between the electron vibration generating body and at least one of the air supply passage and the fuel supply passage, the electric conductor including a vehicle body on which the engine is mounted, and the vehicle body including a cigarette lighter socket,
wherein the electron vibration generator is attached to the socket, and the vibration of the electron vibration generator is transmitted via the vehicle body to at least one of the fuel supply passage and the air supply passage.

14. The gas processing device according to claim 13, **characterized in that** the light source has a power source corresponding to a battery mounted on the vehicle body.

15. The gas processing device according to claim 13 or 14, **characterized by**:
a further electron vibration generating body attached to at least one of the fuel supply passage and the air supply passage, the further electron vibration generating body being vibrated by vibrations transmitted from the electron vibration generator via the vehicle body.

16. The gas processing device according to any one of claims 1 to 15, **characterized in that** the electron vibration generating body is ring-shaped and fitted to an outer wall of the gas passage so as to extend around the gas passage.

17. The gas processing device according to any one of claims 1 to 16, **characterized in that** the main body includes a front side that is irradiated with light and a rear side opposite to the front side, the gas processing device further comprising:
a magnet attached to or arranged close to the main body on said rear side.

18. The gas processing device according to claim 17, **characterized in that** the magnet has an N-pole side facing towards the rear side of the main body.

19. The gas processing device according to claim 4 or 13, **characterized in that** the electron vibration generating body and a light source are arranged outside the gas passage, the electric conductor is connected to the electron vibration generating body, and the electric conductor transmits the vibration of the electron vibration generating body to the gas passage from outside the gas passage.

20. A combustion efficiency improving device for an engine, the device being **characterized by**:
an electron vibration generating main body having a resistivity being 0 to 200×10⁻⁶Ω·cm at 20°C, wherein the main body being vibrated when irradiated with light;
a surface body adhered to the main body, the surface body including an infrared ray radiating substance for generating light in an infrared wavelength range of 10⁻⁶ to 10⁻⁴ m when the surface body is irradiated with light; and
an electric conductor arranged between the main body and at least one of a fuel supply passage for supplying the engine with fuel and an air supply passage for supplying the engine with air.
